# EUROPÄISCHE PATENTANMELDUNG

(11) **EP 4 748 978 A1**
(43) Veröffentlichungstag der Anmeldung: **27.05.2026**
(21) Anmeldenummer: 24214437.6
(22) Anmeldetag: 21.11.2024
(51) Int. Cl.: C25D 3/56, C25B 9/00, C25D 3/60, C25D 15/00, C25D 5/36, C25D 7/06

(54) **DISPERSIONSELEKTROLYT FÜR GRAPHITPARTIKEL-HALTIGE ZINN-NICKEL-LEGIERUNGSSCHICHTEN**

(71) Anmelder: Dr.Ing. Max Schlötter GmbH & Co. KG, 73312 Geislingen (DE)
(72) Erfinder: Gerngross, Mark-Daniel, 73084 Salach (DE); Ulrich, Nils, 73084 Salach (DE); Neifer, Michael, 73337 Bad Überkingen (DE)
(74) Vertreter: Hoffmann Eitle

(57) **Zusammenfassung**

Es wird ein Dispersionselektrolyt für das galvanische Abscheiden von Graphitpartikel-haltigen Zinn-Nickel-Legierungsschichten auf einem metallischen oder metallisierten Substrat beschrieben. Der Dispersionselektrolyt enthält Sn²⁺-Ionen, Ni²⁺-Ionen, Graphitpartikel, mindestens ein Dispergiermittel, ausgewählt aus anionischen und nichtionischen Dispergiermitteln, Ionen mindestens eines dritten Legierungselements und/oder mindestens eine weitere organische Verbindung, die beim galvanischen Abscheiden zersetzt wird und als Quelle von Kohlenstoff als ein drittes Legierungselement dient, und Wasser. Der Dispersionselektrolyt weist einen pH-Wert von 3,5 bis 7 auf. Die Ionen des dritten Legierungselement sind aus Cobalt (Co²⁺)-, Mangan (Mn²⁺)-, Kupfer (Cu²⁺)-, Chrom (Cr³⁺)-, Molybdän (Mo²⁺)-, Bismut (Bi³⁺)-, Antimon (Sb³⁺)-, Selen (Se³⁺)-, Tellur (Te²⁺)-, Silber (Ag⁺)- und Germanium (Ge²⁺)-Ionen und Kombinationen davon ausgewählt.

## Beschreibung

### Technisches Gebiet der Erfindung

Die vorliegende Erfindung betrifft einen Dispersionselektrolyten für das galvanische Abscheiden von Graphitpartikel-haltigen Zinn-Nickel-Legierungsschichten, ein Verfahren zur Herstellung eines beschichten Substrats, das den Dispersionselektrolyten verwendet, das beschichtete Substrat, sowie eine elektrochemische Zelle, eine Elektrode, eine Bipolarplatte, einen Steckkontakt, einen Schaltkontakt, einen Schleifkontakt oder ein Gleitelement, umfassend das beschichtete Substrat, sowie die Verwendung des Dispersionselektrolyten für die galvanische Beschichtung eines Bauteils für eine elektrochemische Zelle oder für die galvanische Beschichtung einer nicht für elektrochemische Zellen vorgesehenen Elektrode, eines Steckkontakts, eines Schaltkontakts, eines Schleifkontakts oder eines Gleitelements.

### Technischer Hintergrund

Für viele elektronische Anwendungen ist es wünschenswert, Edelmetalle durch kostengünstige Nichtedelmetalle teilweise oder vollständig zu ersetzen. Es wird beispielsweise versucht, Überzüge aus Edelmetallen durch kostengünstige Nichtedelmetalle zu ersetzen. Neben guten elektrischen Eigenschaften sind dabei auch eine gute Beständigkeit gegen Korrosion wünschenswert, um langlebige und damit auch nachhaltige elektronische Komponenten, wie zum Beispiel einen Kontakt oder eine Elektrode, zu erhalten.

Beispielsweise werden in elektrochemischen Zellen, insbesondere Elektrolysezellen, Brennstoffzellen und Redox-Flow-Batterien, Zinn-Nickel-Legierungen als Beschichtungen, zum Beispiel von Elektroden oder Bipolarplatten, eingesetzt, weil Sie eine gute Korrosionsbeständigkeit aufweisen. Solche Zinn-Nickel-Legierungen können galvanisch abgeschieden werden und weisen dann typischerweise eine Zusammensetzung von SnNi, also etwa 65 Gew.-% Zinn und 35 Gew.-% Nickel, bezogen auf die Legierung, auf.

In hochkorrosiven Medien bzw. bei länger andauerndem Betrieb kann jedoch Nickel aus einer solchen Zinn-Nickel-Legierung herausgelöst werden, was auch als Nickel-Leaching bezeichnet wird. Es wird vermutet, dass beim Nickel-Leaching Nickeloxide an der Oberfläche langsam aufgebrochen werden oder Nickel im Zuge einer langsamen Oxidation aus der Legierung herausgelöst wird. Hierdurch wird die Beständigkeit der Beschichtung reduziert. Das herausgelöste Nickel kann zu weiteren Problemen wie einer Vergiftung einer Polymerelektrolytmembran (PE-Membran oder kurz PEM) führen, was die Betriebsdauer einer elektrochemischen Zelle reduzieren kann. Es wäre daher wünschenswert, beständigere Beschichtungen zu entwickeln, die bei guter Korrosionsbeständigkeit zu einem geringen bzw. langsameren Nickel-Leaching führen und so einen längeren Betrieb einer elektrochemischen Zelle ermöglichen.

Ebenso wäre es wünschenswert, auch bei anderen Anwendungen von Zinn-Nickel-Legierungen die Beständigkeit gegen Korrosion oder andere Einwirkungen weiter zu verbessern.

### Zusammenfassung der Erfindung

Eine Aufgabe der vorliegenden Erfindung besteht daher darin, einen Elektrolyten für das galvanische Abscheiden von Schichten bereitzustellen, die im Vergleich zu herkömmlichen Zinn-Nickel-Legierungsschichten eine verbesserte chemische bzw. elektrochemische Beständigkeit aufweisen. Weitere Aufgaben bestehen darin, ein Verfahren zum Beschichten eines Substrats mit einer solchen Schicht, das den Elektrolyten verwendet, das beschichtete Substrat sowie Anwendungen des beschichteten Substrats und des Elektrolyten bereitzustellen.

Diese Aufgaben werden durch den Dispersionselektrolyten für das galvanische Abscheiden von Graphitpartikel-haltigen Zinn-Nickel-Legierungsschichten, das Verfahren zum Herstellen eines beschichteten Substrats, das den Dispersionselektrolyten verwendet, das beschichtete Substrat, eine elektrochemische Zelle, eine Elektrode, eine Bipolarplatte, einen Steckkontakt, einen Schaltkontakt, einen Schleifkontakt oder ein Gleitelement, umfassend das beschichtete Substrat, sowie die Verwendung des Dispersionselektrolyten für die galvanische Beschichtung eines Bauteils für eine elektrochemische Zelle oder für die galvanische Beschichtung einer nicht für elektrochemische Zellen vorgesehenen Elektrode, eines Steckkontakts, eines Schaltkontakts, eines Schleifkontakts oder eines Gleitelements gemäß den unabhängigen Ansprüchen gelöst. Nachfolgend und in den abhängigen Ansprüchen werden optionale und bevorzugte Ausgestaltungen angegeben.

### Detaillierte Beschreibung der Erfindung

Die vorliegende Erfindung stellt einen Dispersionselektrolyten für das galvanische Abscheiden von Graphitpartikel-haltigen Zinn-Nickel-Legierungsschichten bereit. Der Dispersionselektrolyt umfasst:
- Sn²⁺-Ionen in einer Konzentration von 2 bis 50 g/L;
- Ni²⁺-Ionen in einer Konzentration von 0,2 bis 70 g/L;
- Graphitpartikel in einer Konzentration von 5 bis 200 g/L;
- mindestens ein Dispergiermittel, ausgewählt aus anionischen Dispergiermitteln, nichtionischen Dispergiermitteln und Kombinationen davon, in einer Gesamtkonzentration von 0,3 bis 100 g/L;
- Ionen eines dritten Legierungselements in einer Gesamtkonzentration von 0,1 bis 150 g/L und/oder mindestens eine weitere organische Verbindung in einer Gesamtkonzentration von 1 bis 100 g/L,
   wobei die Ionen des dritten Legierungselements aus Cobalt (Co²⁺)-, Mangan (Mn²⁺)-, Kupfer (Cu²⁺)-, Chrom (Cr³⁺)-, Molybdän (Mo²⁺)-, Bismut (Bi³⁺)-, Antimon (Sb³⁺)-, Selen (Se³⁺)-, Tellur (Te²⁺)-, Silber (Ag⁺) - und Germanium (Ge²⁺)-Ionen und Kombinationen davon ausgewählt sind, und
   wobei die mindestens eine weitere organische Verbindung von dem mindestens einen Dispergiermittel verschieden ist und beim galvanischen Abscheiden zersetzt wird und als Quelle von Kohlenstoff als ein drittes Legierungselement der Zinn-Nickel-Legierung dient; und
- Wasser;
   wobei der Dispersionselektrolyt einen pH-Wert von 3,5 bis 7 aufweist. Der Dispersionselektrolyt wird im Folgenden auch kurz als "Elektrolyt" bezeichnet.

Die Erfinder haben überraschend gefunden, dass mit dem Dispersionselektrolyten Graphitpartikel-haltige Zinn-Nickel-Legierungsschichten galvanisch abgeschieden werden können, die eine besonders gute Beständigkeit gegen verschiedene Einflüsse, insbesondere korrosive Medien, aufweisen. Es wurde weiterhin überraschend gefunden, dass mit dem erfindungsgemäßen Dispersionselektrolyten Graphitpartikel-haltige Zinn-Nickel-Legierungsschichten abgeschieden werden können, aus denen bei Verwendung in elektrochemischen Zellen Nickel nur im geringen Maße bzw. langsam herausgelöst wird, also ein sogenanntes Nickel-Leaching reduziert wird. Hierdurch wird die Beständigkeit der Beschichtung verbessert und die Verwendungszeiten elektrochemischer Zellen können verlängert werden, weil es zu wenig, langsamer oder keiner Vergiftung der Polymerelektrolytmembran (PE-Membran oder kurz PEM) mit Nickel kommt.

Der Dispersionselektrolyt enthält Ionen mindestens eines dritten Legierungselements, die aus bestimmten Metallionen ausgewählt sind, und/oder mindestens eine weitere organische Verbindung, die beim galvanischen Abscheiden zersetzt wird und so als Kohlenstoffquelle für die Zinn-Nickel-Legierung dient, worin der Kohlenstoff dann ein drittes Legierungselement bildet. Die weitere organische Verbindung kann also als Kohlenstoff-Vorläuferverbindung verstanden werden. Somit enthält die mit dem Dispersionselektrolyten galvanisch abgeschiedene Zinn-Nickel-Legierung neben Zinn und Nickel als Legierungselemente mindestens ein weiteres oder "drittes" Legierungselement, das aus den bestimmten Metallen bzw. Kohlenstoff ausgewählt ist. Die galvanisch abgeschiedene Schicht ist also eine Graphitpartikel-haltige Zinn-Nickeldrittes Legierungselement-Legierungsschicht, wobei die Zinn-Nickel-drittes Legierungselement-Legierung im Zusammenhang mit der vorliegenden Erfindung auch kurz als "Zinn-Nickel-Legierung" bezeichnet wird.

In der abgeschiedenen Zinn-Nickel-Legierung ersetzt das dritte Legierungselement gewissermaßen Nickel und/oder Zinn, wodurch ein Nickel-Leaching reduziert und die Korrosionsbeständigkeit verbessert werden kann. Es wurde insbesondere gefunden, dass die Zinn-Nickel-Legierung der mit dem Dispersionselektrolyten abgeschiedenen Graphitpartikel-haltigen Zinn-Nickel-Legierungsschichten ein geringeres Nickel-Leaching sowie eine höhere Korrosionsbeständigkeit als eine binäre Zinn-Nickel-Legierung mit vergleichbarem Nickelgehalt aufweisen kann.

Der vorstehend genannte Effekt ist insbesondere bei einem niedrigen Nickelgehalt vorteilhaft. Wird bei einer binären Zinn-Nickel-Legierungen, die üblicherweise Zinn und Nickel im Molverhältnis 1:1, also etwa 65 Gew.-% Zinn und etwa 35 Gew.-% Nickel, bezogen auf die Legierung, aufweist, der Nickelgehalt reduziert, so geht der geringere Nickelgehalt zwar in der Regel mit einem geringeren Nickel-Leaching aber auch mit einer geringeren Beständigkeit der Legierungsschicht gegenüber korrosiven Medien einher, weil aufgrund des geringeren Nickelgehalts die Auflösungsrate (Korrosionsrate) der Schicht erhöht wird. Bei der Graphitpartikel-haltigen Zinn-Nickel-Legierungsschicht wird jedoch durch das dritte Legierungselement die Korrosionsbeständigkeit der Zinn-Nickel-Legierung erhöht, sodass es auch möglich ist, einen niedrigen Nickelgehalt bei guter Korrosionsbeständigkeit der Zinn-Nickel-Legierung zu realisieren.

In der abgeschiedenen Zinn-Nickel-Legierung liegt Kohlenstoff, falls vorhanden, in atomarer oder nanoskalarer Form vor und bildet einen Legierungsbestandteil. Im Gegensatz hierzu liegen die Graphitpartikel als Partikel in der abgeschiedenen Schicht verteilt vor und bilden keinen Legierungsbestandteil. Die Graphitpartikel-haltige Zinn-Nickel-Legierungsschicht kann also als Kompositschicht verstanden werden, die eine Zinn-Nickel-Legierung und Graphitpartikel umfasst oder daraus besteht.

Die im Dispersionselektrolyten enthaltenen Graphitpartikel können zusammen mit der Zinn-Nickel-Legierung als Graphitpartikel-haltige Zinn-Nickel-Legierungsschicht galvanisch abgeschieden werden. "Graphitpartikel-haltig" bedeutet in diesem Zusammenhang, dass Graphit in Form von Graphitpartikeln in der abgeschiedenen Schicht enthalten ist, die spektroskopisch nachgewiesen werden können. Die Graphitpartikel dienen dazu, bei Verwendung eines mit der Graphitpartikel-haltigen Zinn-Nickel-Legierungsschicht beschichteten Substrats in einer elektrochemischen Zelle den elektrischen Kontakt innerhalb der elektrochemischen Zelle zuverlässig aufrecht zu erhalten. Beispielsweise kann beim Betrieb einer elektrochemischen Zelle eine Zinn-Nickel-Legierung passivieren, also eine Oxidschicht bilden, wodurch der Kontakt- bzw. Übergangswiderstand erhöht wird. Da die Graphitpartikel unter den elektrochemischen Bedingungen nicht passivieren, verbessern sie die Leitfähigkeit und senken den Kontakt- bzw. Übergangswiderstand ab.

Weiterhin werden durch die Graphitpartikel die tribologischen Eigenschaften, insbesondere die Abriebfestigkeit, im Vergleich zu einer entsprechenden Schicht ohne Graphitpartikel verbessert. Mit den verbesserten tribologischen Eigenschaften geht auch eine erhöhte Haltbarkeit der Beschichtung aufgrund einer reduzierten Sprödigkeit einher. Weiterhin kann mit Graphitpartikeln der Kontaktwiderstand der abgeschiedenen Schicht gegenüber anderen Metallen verringert werden. Aufgrund der guten Korrosionsbeständigkeit und mechanischen Beständigkeit eignet sich die aus dem Dispersionselektrolyten abgeschiedene Graphitpartikel-haltige Zinn-Nickel-Legierungsschicht auch für zahlreiche andere Anwendungen mit und ohne elektrischer Funktion, zum Beispiel für eine Elektrode, einen Steckkontakt, einen Schaltkontakt, einen Schleifkontakt oder ein Gleitelement.

Unter Verwendung des Dispersionselektrolyten ist es also möglich, diese vorteilhafte Eigenschaftskombination in einer Schicht zu realisieren.

In dem Dispersionselektrolyten sind Sn²⁺- und Ni²⁺-Ionen enthalten, also Zinn- und Nickelsalze gelöst. Grundsätzlich können alle geeigneten Zinn- bzw. Nickelsalze verwendet werden, also beispielsweise Halogenide, Sulfate, Sulfamate, Acetate, und Kombinationen davon. Bevorzugt werden Chlorsalze, also SnCl₂·nH₂O und NiCl₂·nH₂O, eingesetzt, weil diese günstig und gut zu handhaben sind, und die ChloridIonen (Cl⁻) die Leitfähigkeit des Elektrolyten erhöhen. Es können wasserfreie Salze oder Salze mit Kristallwasser eingesetzt werden, was durch den Zusatz "nH₂O" angegeben wird, wobei n typischerweise 0 bis 6 ist. Bevorzugt werden SnCl₂·2H₂O bzw. NiCl₂·6H₂O für den Elektrolyt eingesetzt, weil diese Salze besonders lagerfähig und günstig sind.

Unabhängig von der Wahl des dritten Legierungselements bzw. der weiteren organischen Verbindung, die als Kohlenstoff-

Vorläuferverbindung dient, enthält der Elektrolyt Sn²⁺-Ionen in einer Konzentration von 2 bis 50 g/L und Ni²⁺-Ionen in einer Konzentration von 0,2 bis 70 g/L. Der Elektrolyt enthält bevorzugt 5 bis 45 g/L, mehr bevorzugt 20 bis 30 g/L, Sn²⁺-Ionen, und/oder bevorzugt 10 bis 65 g/L, bevorzugt 40 bis 55 g/L, Ni²⁺-Ionen. Der Einbau von Zinn bzw. Nickel in die Zinn-Nickel-Legierung kann über die Konzentration der entsprechenden Ionen im Elektrolyten, die Wahl und Konzentration der Ionen des dritten Legierungselements bzw. der weiteren organischen Verbindung oder die Bedingungen bei der galvanischen Abscheidung gesteuert werden.

Wie oben ausgeführt, enthält der Dispersionselektrolyt Ionen mindestens eines dritten Legierungselement und/oder mindestens eine weitere organische Verbindung als Kohlenstoff-Vorläuferverbindung. In dem Elektrolyten sind die Ionen des dritten Legierungselements aus der Gruppe, bestehend aus Cobalt (Co²⁺)-, Mangan (Mn²⁺)-, Kupfer (Cu²⁺)-, Chrom (Cr³⁺) -, Molybdän (Mo²⁺) -, Bismut (Bi³⁺) -, Antimon (Sb³⁺) -, Selen (Se³⁺) -, Tellur (Te²⁺) -, Silber (Ag⁺) - und Germanium (Ge²⁺)-Ionen und Kombinationen davon, ausgewählt. Es können also Ionen mindestens eines dritten Legierungselements enthalten sein. In der abgeschiedenen Zinn-Nickel-Legierung schließt die Gruppe der dritten Legierungselemente dann Kohlenstoff mit ein, der nach Zersetzen der weiteren organischen Verbindung in die Legierung eingebaut werden kann.

Es werden typischerweise wasserlösliche Salze, in denen das mindestens eine dritte Legierungselement in einer stabilen Oxidationsstufe vorliegt, verwendet, also Co²⁺, Mn²⁺, Cu²⁺, Cr³⁺, Mo²⁺, Bi³⁺, Sb³⁺, Se²⁺, Te²⁺, Ag⁺ und Ge²⁺. Es können grundsätzlich alle gängigen wasserlöslichen Salze verwendet werden. Die Salze können so ausgewählt werden, dass sich keine schwerlöslichen Niederschläge bilden. Zum Beispiel kann im Falle von Silber als drittes Legierungselement auf Halogenide verzichtet werden. Weiterhin kann auch mit den unten beschriebenen Komplexbildnern die Bildung von schwerlöslichen Niederschlägen, wie zum Beispiel AgF oder AgCl, unterdrückt werden.

Der Dispersionselektrolyt enthält Ionen des mindestens einen dritten Legierungselements in einer Gesamtkonzentration von 0,1 bis 150 g/L, bevorzugt 3 bis 120 g/L, mehr bevorzugt 3 bis 80 g/L, um eine gute Handhabung des Elektrolyten und Kontrolle der galvanischen Abscheidung zu gewährleisten. Der Dispersionselektrolyt kann bevorzugt 0,1 bis 50 g/L, mehr bevorzugt 1 bis 20 g/L, noch mehr bevorzugt 5 bis 15 g/L, Ionen pro drittes Legierungselement enthalten. Der bevorzugte Gehalt der Ionen des jeweiligen dritten Legierungselements richtet sich unter anderem danach, wie edel bzw. unedel das jeweilige Element ist. Bevorzugt enthält der Dispersionselektrolyt als Ionen des dritten Legierungselements mindestens eines der folgenden:
- 1 bis 50 g/L, bevorzugt 3 bis 20 g/L, mehr bevorzugt 5 bis 15 g/L, Co²⁺-Ionen,
- 0,1 bis 20 g/L, bevorzugt 0,1 bis 5 g/L, mehr bevorzugt 0,1 bis 2 g/L, Cu²⁺-Ionen,
- 1 bis 50 g/L, bevorzugt 3 bis 20 g/L, mehr bevorzugt 10 bis 20 g/L, Cr³⁺-Ionen,
- 1 bis 50 g/L, bevorzugt 3 bis 20 g/L, mehr bevorzugt 5 bis 15 g/L, Mn²⁺-Ionen,
- 1 bis 50 g/L, bevorzugt 3 bis 20 g/L, mehr bevorzugt 5 bis 15 g/L, Mo²⁺-Ionen,
- 1 bis 50 g/L, bevorzugt 3 bis 20 g/L, mehr bevorzugt 10 bis 20 g/L, Bi³⁺-Ionen,
- 1 bis 50 g/L, bevorzugt 3 bis 20 g/L, mehr bevorzugt 10 bis 20 g/L, Sb³⁺-Ionen,
- 0,5 bis 40 g/L, bevorzugt 1 bis 20 g/L, mehr bevorzugt 2 bis 15 g/L, Ag⁺-Ionen,
- 1 bis 50 g/L, bevorzugt 3 bis 20 g/L, mehr bevorzugt 5 bis 15 g/L, Se²⁺-Ionen,
- 1 bis 50 g/L, bevorzugt 3 bis 20 g/L, mehr bevorzugt 5 bis 15 g/L, Te²⁺-Ionen, und/oder
- 1 bis 50 g/L, bevorzugt 3 bis 20 g/L, mehr bevorzugt 5 bis 15 g/L, Ge²⁺-Ionen.

Insbesondere mit den oben genannten Konzentrationen kann das mindestens eine dritte Legierungselement in ausreichender Menge in die Zinn-Nickel-Legierung eingebaut werden, um die gewünschten Vorteile zu erzielen.

Nach einer bevorzugten Ausführungsform sind die Ionen des dritten Legierungselements aus der Gruppe ausgewählt, die aus Co²⁺-, Cu²⁺-, Cr³⁺-, Bi³⁺-, Sb³⁺- und Ag⁺-Ionen und Kombinationen davon besteht. Mehr bevorzugt umfassen die Ionen des dritten Legierungselements Co²⁺- und/oder Sb³⁺- und/oder Ag⁺-Ionen oder sie bestehen daraus. Besonders bevorzugt umfassen die Ionen des dritten Legierungselements Co²⁺-Ionen oder sie bestehen daraus.

Anstelle von oder zusätzlich zu den Ionen des mindestens einen dritten Legierungselement kann der Dispersionselektrolyt mindestens eine weitere organische Verbindung enthalten. Die weitere organische Verbindung kann bei der galvanischen Abscheidung zersetzt werden und so zu einem Einbau von Kohlenstoff als ein drittes Legierungselement in die Zinn-Nickel-Legierung führen. Der gebildete Kohlenstoff bildet dann einen Legierungsbestandteil, d.h., er liegt in der Zinn-Nickel-Legierung als Mischkristall oder als Ausscheidung (z.B. an den Korngrenzen oder als separate Phase) vor. Unter Mischkristall wird verstanden, dass einzelne Kohlenstoffatome in der Elementarzelle der Zinn-Nickel-Legierung auf Gitterplätzen vorhanden sind. Als Ausscheidung wird verstanden, dass sich Kohlenstoffatome in amorpher Form entweder an Korngrenzen und/oder als eigenständige Phase agglomerieren. Der als Legierungsbestandteil vorhandene Kohlenstoff kann je nach Konzentration in der Legierung einerseits nur in Mischkristallform oder in Mischkristallform und als Ausscheidung vorliegen und somit von den Graphitpartikeln unterschieden werden, die keinen Legierungsbestandteil darstellen. Der Nachweis kann über das unten angegebene Verfahren zur Bestimmung der Zusammensetzung sowie mittels Transmissionselektronenmikroskopie (TEM) erfolgen.

Überraschend wurde gefunden, dass auch der Einbau von Kohlenstoff in die Zinn-Nickel-Legierung zu einer guten Korrosionsbeständigkeit der Zinn-Nickel-Legierungsschicht führt. Weiterhin kann der Einbau von Kohlenstoff zu einer Erhöhung der elektrischen Leitfähigkeit der Zinn-Nickel-Legierung führen.

Die weitere organische Verbindung dient als Kohlenstoff-Vorläuferverbindung, da sie durch Zersetzung beim galvanischen Abscheiden als Kohlenstoffquelle für die Zinn-Nickel-Legierung dient, also zu einem vermehrten Einbau von Kohlenstoff in die Zinn-Nickel-Legierung führt. Die weitere organische Verbindung ist von dem mindestens einen Dispergiermittel, insbesondere dem mindestens einen anionischen Dispergiermittel, und, falls vorhanden, dem Komplexbildner verschieden. Falls vorhanden, liegt die mindestens eine weitere organische Verbindung in dem Dispersionselektrolyten in einer Gesamtkonzentration von 1 bis 100 g/L, bevorzugt 5 bis 50 g/L, mehr bevorzugt 6 bis 30 g/L, vor.

Die weitere organische Verbindung umfasst bevorzugt mindestens eine Verbindung, ausgewählt aus Phenolen, Xanthogenaten, Carbamaten, Türkischrotöl, Ketonen, insbesondere Benzalaceton, aromatischen Aldehyden, insbesondere Naphthaldehyd, Polyvinylalkohol und beliebigen Kombinationen davon, oder sie besteht daraus. Bevorzugt ist die weitere organische Verbindung mindestens eine Verbindung, ausgewählt aus Polyvinylalkohol, Benzalaceton und Kombinationen davon.

In dem Dispersionselektrolyten sind bevorzugt die mindestens eine weitere organische Verbindung und/oder Ionen von einem oder zwei dritten Legierungselement(en) enthalten. Neben Zinn und Nickel enthält die abgeschiedene Legierung dann ein, zwei oder drei weitere(s) Element(e) als drittes Legierungselement (einschließlich Kohlenstoff, falls vorhanden). Dies hat den Vorteil, dass so die Zusammensetzung bzw. die Abscheidung der Zinn-Nickel-Legierung leichter kontrolliert werden kann.

Die Gesamtmenge an Ionen des mindestens einen dritten Legierungselements und des Kohlenstoffgehalts der mindestens einen weiteren organischen Verbindung beträgt bevorzugt bis zu 150 g/L, mehr bevorzugt bis zu 120 g/L und noch mehr bevorzugt bis zu 80 g/L.

Der Dispersionselektrolyt enthält weiterhin Graphitpartikel. Diese sind in dem erfindungsgemäßen Dispersionselektrolyten zu 5 bis 200 g/L enthalten, was zu den oben genannten Vorteilen der abgeschiedenen Schicht führt. Bevorzugt beträgt der Gehalt an Graphitpartikeln in dem Elektrolyten 20 bis 150 g/L und mehr bevorzugt 30 bis 100 g/L.

In der Regel wird ein niedriger Gehalt an Graphitpartikeln eingesetzt, wenn der Dispersionselektrolyt auch einen niedrigen Gehalt an Sn²⁺-Ionen, Ni²⁺-Ionen und Ionen des dritten Legierungselements aufweist. Analogerweise wird bei einem hohen Gehalt an Sn²⁺-Ionen, Ni²⁺-Ionen und Ionen des dritten Legierungselements bevorzugt eine höhere Menge an Graphitpartikeln eingesetzt.

Die Art des eingesetzten Graphits ist grundsätzlich nicht beschränkt, es können also natürlicher Graphit oder auch synthetische Graphit-Typen eingesetzt werden. Ebenso ist die äußere Form der Graphitpartikel nicht beschränkt, und es können beispielsweise kugelförmige, ellipsoide, ovale, kantige, flockenförmige, plättchenförmige, unregelmäßig geformte Partikel und Kombinationen davon verwendet werden.

Die mediane (d50) Partikelgröße der Graphitpartikel liegt bevorzugt im Bereich von 20 nm bis 20 µm, mehr bevorzugt im Bereich von 1 bis 10 µm und noch mehr bevorzugt im Bereich von 1,5 bis 8 µm. Die Partikelgröße wird mittels Laserbeugung gemäß ISO 13320:2020, zum Beispiel mit einem HELOS-Spektrometer (Helium-Neon Laser Optisches System), bestimmt. In der Regel sollte die Partikelgröße kleiner oder gleich der gewünschten Schichtdicke der Graphitpartikel-haltigen Zinn-Nickel-Legierungsschicht sein. Die Partikelgröße kann durch gängige Mahlverfahren und/oder Siebverfahren, mit denen zu grobe oder feine Partikel abgetrennt werden können, eingestellt werden. Geeignete Graphitpartikel sind auch kommerziell erhältlich.

Tendenziell resultieren kleinere Graphitpartikel, insbesondere mit einer medianen Partikelgröße von 20 nm bis 0,5 µm, in relativ harten Schichten, einer moderaten Verbesserung der tribologischen Eigenschaften sowie in niedrigeren Kontaktwiderständen. Graphitpartikel mit medianer Partikelgröße von 1,5 bis 8 µm resultieren tendenziell in sehr guten tribologischen Eigenschafen und in einer signifikanten Verringerung des Kontaktwiderstandes, wenn auch in einer etwas geringeren Härte als vergleichbare Zinn-Nickel-Legierungsschichten ohne Graphitpartikel.

Um eine effiziente Dispersion der Graphitpartikel in dem Elektrolyten und eine gleichmäßige Integration der Graphitpartikel in die Graphitpartikel-haltige Zinn-Nickel-Legierungsschicht zu erhalten, enthält der erfindungsgemäße Dispersionselektrolyt mindestens ein Dispergiermittel. Das mindestens eine Dispergiermittel ist aus nichtionischen Dispergiermitteln, anionischen Dispergiermitteln und Kombinationen davon ausgewählt.

Ein nichtionisches Dispergiermittel enthält keine ionischen funktionellen Gruppen sowie keine Gruppen, die beim pH-Wert des Elektrolyten ionische Gruppen bilden. Beispiele für nichtionische Dispergiermittel sind Polyalkylenglycolether, insbesondere Polyethylenglycolether, Alkylpolyglucoside oder Alkylpolyalkylenglycolether und Kombinationen davon.

Ein anionisches Dispergiermittel ist eine organische Verbindung und weist einen oder mehrere unpolare Molekülteile, gebildet aus Kohlenstoff und Wasserstoff, und eine oder mehrere anionische funktionelle Gruppen, insbesondere Sulfatgruppen (-OSO₃⁻), Sulfonatgruppen (-SO₃⁻), Carboxylatgruppen (-CO₂⁻), Carboxygruppen (-CO₂H), die in wässriger Lösung dann als Anionen vorliegen können, und Kombinationen davon auf. Als Gegenionen sind in der Regel H⁺, Alkalimetallionen, bevorzugt K⁺ und/oder Na⁺, und/oder Ammoniumionen (NH₄⁺) vorhanden, weil diese in einer guten Wasserlöslichkeit resultieren, die Leitfähigkeit erhöhen können und die galvanische Abscheidung nicht negativ beeinflussen. Der Elektrolyt enthält daher entsprechend auch Gegenionen des anionischen Dispergiermittels, bevorzugt Na⁺ und/oder K⁺. Sulfatgruppen und Sulfonatgruppen liegen bei dem pH-Wert des Dispersionselektrolyten dissoziiert, also in nicht protonierter Form, vor. Carboxygruppen und Carboxylatgruppen können hingegen im Gleichgewicht miteinander stehen. Enthält ein Dispergiermittel anionische und nichtionische funktionelle Gruppen so wird es zu den anionischen Dispergiermitteln gezählt.

Das mindestens eine Dispergiermittel wird in einer Gesamtkonzentration von 0,3 bis 100 g/L in dem Dispersionselektrolyten eingesetzt. Es wird insbesondere in einer Gesamtkonzentration von 0,5 bis 50 g/L, bevorzugt 0,7 bis 20 g/L, in dem Elektrolyten eingesetzt. Die geeignete Menge des Dispergiermittel kann sich je nach Art des Dispergiermittels unterscheiden, von den bevorzugten anionischen Dispergiermitteln wird typischerweise weniger benötigt als von anderen Dispergiermitteln. In der Regel führt eine höhere Menge an einem Dispergiermittel zu einer besseren Dispersion der Graphitpartikel. Bei hohen Konzentration an Dispergiermittel nimmt der Effekt jedoch ab. Mit anderen Worten, bei einer ausreichenden Menge an Dispergiermittel führt eine weitere Zugabe dann zu keiner weiteren oder nur einer geringen Verbesserung der Dispersion.

Nach einer bevorzugten Ausführungsform umfasst das Dispergiermittel mindestens ein anionisches Dispergiermittel oder es besteht daraus. Bevorzugt sind dabei mindestens 60 Gew.-% oder mehr, mehr bevorzugt mindestens 80 Gew.-% oder mehr des Dispergiermittels ein oder mehrere anionische(s) Dispergiermittel. Besonders bevorzugt ist das Dispergiermittel aus mindestens einem anionischen Dispergiermittel ausgewählt.

Nach einer bevorzugten Ausführungsform umfasst das anionische Dispergiermittel mindestens ein anionisches Dispergiermittel, ausgewählt aus Sulfat-Verbindungen, die eine Alkylgruppe, eine Aralkylgruppe oder eine aromatische Gruppe mit jeweils bis zu 30 Kohlenstoffatomen aufweisen, Sulfonat-Verbindungen, die eine Alkylgruppe, eine Aralkylgruppe oder eine aromatische Gruppe mit jeweils bis zu 30 Kohlenstoffatomen aufweisen, und Carboxy- und/oder Carboxylatgruppen-haltigen Polymeren, oder es besteht daraus.

Mehr bevorzugt umfasst das anionische Dispergiermittel mindestens ein anionisches Dispergiermittel, ausgewählt aus Sulfat-Verbindungen mit einer Alkylgruppe mit 6 bis 24 Kohlenstoffatomen, bevorzugt mit 10 bis 20 Kohlenstoffatomen, Sulfat-Verbindungen mit einer Aralkylgruppe mit 6 bis 24 Kohlenstoffatomen, bevorzugt mit 10 bis 20 Kohlenstoffatomen, Sulfonat-Verbindungen, die eine aromatische Gruppe mit jeweils 6 bis 24 Kohlenstoffatomen, bevorzugt 6 bis 14 Kohlenstoffatomen, aufweisen, und Kombinationen davon. Es kann auch daraus bestehen.

Bevorzugt umfasst das anionische Dispergiermittel mindestens eine Sulfonat-Verbindung, die eine aromatische Gruppe mit jeweils 6 bis 24 Kohlenstoffatomen, bevorzugt 6 bis 14 Kohlenstoffatomen, aufweist. Dies kann in einer besonders niedrigen Porenbildung in der abgeschiedenen Schicht resultieren.

Nach einer besonders bevorzugten Ausführungsform umfasst das anionische Dispergiermittel mindestens ein erstes anionisches Dispergiermittel, das aus Sulfat-Verbindungen mit einer Alkylgruppe mit 6 bis 24 Kohlenstoffatomen, bevorzugt mit 10 bis 20 Kohlenstoffatomen, Sulfat-Verbindungen mit einer Aralkylgruppe mit 6 bis 24 Kohlenstoffatomen, bevorzugt mit 10 bis 20 Kohlenstoffatomen, und Kombinationen davon ausgewählt ist, und mindestens ein zweites anionisches Dispergiermittel, das aus Sulfonat-Verbindungen, die eine aromatische Gruppe mit 6 bis 24 Kohlenstoffatomen, bevorzugt 6 bis 14 Kohlenstoffatomen, aufweisen, ausgewählt ist. Weiter bevorzugt besteht das anionische Dispergiermittel aus dem mindestens einen ersten und dem mindestens einen zweiten anionischen Dispergiermittel. Diese werden insbesondere in einem Gewichtsverhältnis von erstem anionischen Dispergiermittel zu zweitem anionischen Dispergiermittel von 1:10 bis 10:1, bevorzugt 1:8 bis 3:1, mehr bevorzugt 1:3 bis 2:1 eingesetzt. Eine Kombination von dem mindesten einen ersten und dem mindestens einen zweiten Dispergiermittel ist besonders vorteilhaft für eine effektive Dispersion der Graphitpartikel und eine Benetzung der Oberfläche des zu beschichtenden Substrats, was die Abscheidung verbessern kann. Weiterhin kann die Bildung von Poren in der abgeschiedenen Schicht reduziert werden.

Die Sulfat-Verbindungen mit einer Alkylgruppe sind bevorzugt aus Alkylsulfaten, Alkyl-Polyether-Sulfaten, Alkyl-Aryl-Polyether-Sulfaten und Kombinationen davon ausgewählt. Die Alkylgruppe mit 6 bis 24 Kohlenstoffatomen, bevorzugt 10 bis 20 Kohlenstoffatomen, stammt dabei insbesondere von einem Fettalkohol. Polyethergruppen sind dabei bevorzugt Polyethylenglycolgruppen.

Die Sulfonat-Verbindungen mit einer aromatischen Gruppe mit 6 bis 24 Kohlenstoffatomen, bevorzugt 6 bis 14 Kohlenstoffatomen, sind bevorzugt aus Arylsulfonaten, Polymeren mit aromatischen Sulfonatgruppen und Salzen davon sowie Kombinationen davon ausgewählt. Besonders bevorzugt sind als Arylsulfonate Benzolsulfonsäure, Phenolsulfonsäure und Naphthalinsulfonsäure, insbesondere Naphthalinsulfonsäure, und Salze davon. Bei Polymeren mit aromatischen Sulfonatgruppen weisen die zugrundeliegenden aromatischen Gruppen bevorzugt jeweils 6 bis 14 Kohlenstoffatome auf und sind insbesondere von Benzolsulfonsäure, Phenolsulfonsäure und Naphthalinsulfonsäure und Salzen davon abgeleitet. Solche Polymere sind beispielsweise Polykondensate von aromatischen Sulfonat-Verbindungen, wie zum Beispiel Benzolsulfonsäure, Phenolsulfonsäure und Naphthalinsulfonsäure bzw. Salzen davon, mit Formaldehyd, insbesondere Naphthalinsulfonsäure-Formaldehyd-Polykondensate und Salze davon, beispielsweise Tamol^{®} von BASF SE. Besonders bevorzugt sind Polymere mit aromatischen Sulfonatgruppen und Salze davon als Sulfonat-Verbindungen mit einer aromatischen Gruppe.

Andere Beispiele für anionische Dispergiermittel sind Sokalan^{®} (BASF SE, Poly(meth)arcylatsäure-haltiges Polymer bzw. Salze davon), zum Beispiel Sokalan^{®} SR, Natrium-Phenolsulfonsäure-Kondensate, Natrium-Phenylsulfonsäure-Kondensate, Natrium-Naphthalinsulfonsäure-Kondensate, Disponil^{®} APE (BASF SE, Alkyl-Polyglycolether-Sulfate) und Fettalkohol-Sulfate mit 6 bis 20 Kohlenstoffatomen wie beispielsweise 2-Ethylhexylsulfate (zum Beispiel Natriummetasulfat), Laurylsulfate, Oleylsulfate, Stearylsulfate und Sulfate gemischter Fettalkohole, insbesondere die entsprechenden Natriumsalze davon.

Wie oben ausgeführt, ermöglicht das Dispergiermittel eine effektive Dispersion der Graphitpartikel in dem Elektrolyten und einen gleichmäßigen Einbau der Graphitpartikel in die Graphitpartikel-haltige Zinn-Nickel-Legierungsschicht. Die Graphitpartikel können in der Regel pulverförmig in den Elektrolyten eingebracht und dann beim Durchmischen des Elektrolyten durch das Dispergiermittel dispergiert werden, so dass der Elektrolyt einfach hergestellt werden kann. Die Graphitpartikel können auch vorab dispergiert und dann eingebracht werden. In der Regel ist es nicht erforderlich, den Dispersionselektrolyten im Ultraschallbad zu homogenisieren, wodurch der präparative Aufwand reduziert wird und der Dispersionselektrolyt wirtschaftlich und auch in großem Maßstab betrieben werden kann. Weiterhin kann in dem erfindungsgemäßen Dispersionselektrolyt auch auf Phosphate und Pyrophosphate verzichtet werden, wodurch die Löslichkeit der Zinn- bzw. Nickelsalze verbessert wird.

Der Dispersionselektrolyt enthält bevorzugt einen oder mehrere Komplexbildner. Komplexbildner können dazu dienen, die Ni²⁺- und Sn²⁺-Ionen sowie ggf. die Ionen des dritten Legierungselements stabil in Lösung zu halten und zu mobilisieren, so dass die Graphitpartikel-haltige Zinn-Nickel-Legierungsschicht gleichmäßig und mit guter Abscheidungsrate gebildet werden kann. Weiterhin können Komplexbildner die Bildung von schwerlöslichen Niederschlägen unterdrücken. Komplexbildner können auch dazu dienen, einen hohen Anteil an dem mindestens einen dritten Legierungselement abzuscheiden. Als Komplexbildner können grundsätzlich alle dem Fachmann bekannten, für Zinn- bzw. Nickel-Elektrolyte verwendeten Komplexbildner eingesetzt werden. Der Komplexbildner ist bevorzugt Chelat-bildend und wasserlöslich. Bevorzugt umfasst der Komplexbildner Ammoniak und/oder eine oder mehrere organische Verbindungen, die mindestens drei funktionelle Gruppen aufweisen, von denen drei oder mehr funktionelle Gruppen aus Aminogruppen, Carboxygruppen, Carboxylatgruppen, Phosphonsäuregruppen und Kombinationen davon ausgewählt sind, oder er besteht daraus. Von den funktionellen Gruppen sind bevorzugt mindestens zwei Gruppen Aminogruppen. Die Aminogruppen sind aus primären, sekundären und tertiären Aminogruppen ausgewählt. Weiter bevorzugt enthält der Komplexbildner eine oder mehrere sekundäre und/oder tertiäre Aminogruppen. Die zur Koordination vorgesehenen funktionellen Gruppen sind typischerweise durch 2 oder 3 Atome, insbesondere 2 oder 3 Kohlenstoffatome, voneinander beabstandet, sodass sich ein stabiler Chelat-Komplex bilden kann. Der Komplexbildner ist von dem Dispergiermittel und der weiteren organischen Verbindung, die, falls vorhanden, als Kohlenstoff-Vorläuferverbindung dient, verschieden.

Besonders bevorzugt umfasst der Komplexbildner eine oder mehrere Verbindungen, die aus Ammoniak, EDTA, DETA, DOTA und DOTATOC bzw. Salzen davon ausgewählt sind, oder er besteht daraus. EDTA steht für Ethylendiamintetraessigsäure. DETA bezeichnet Diethylentriamin. DOTA steht für 1,4,7,10-Tetraazacyclododecan-1,4,7,10-tetraessigsäure. DOTATOC bezeichnet einen von DOTA abgeleiteten Komplexbildner, bei dem ein DOTA-Molekül über eine Amidbindung mit dem N-Terminus eines Oktapeptids (insbesondere Phe-Cys-Tyr-Lys-Thr-Cys-Thr) verbunden ist. Als Salze werden in der Regel Alkalimetallsalze und/oder Ammoniumsalze verwendet.

Die eingesetzte Menge des Komplexbildners richtet sich vor allem nach der Konzentration der Sn²⁺- und Ni²⁺-Ionen bzw. der Konzentration der Ionen des dritten Legierungselements im Dispersionselektrolyten. Üblicherweise ist der Komplexbildner in einer Konzentration von 5 bis 90 g/L, bevorzugt 10 bis 80 g/L, mehr bevorzugt 40 bis 60 g/L, in dem Elektrolyten enthalten.

Nach einer weiteren bevorzugten Ausführungsform kann der Dispersionselektrolyt zusätzlich zu dem Dispergiermittel eine Sulfonsäure mit 1 bis 4 Kohlenstoffatomen als Leitmedium enthalten. Die Sulfonsäure liegt dann in dem Dispersionselektrolyten in Form von Ionen vor und kann dadurch dessen Leitfähigkeit und die Abscheidungsrate erhöhen. Die Sulfonsäure mit ein bis vier Kohlenstoffatomen wird insbesondere in einer Konzentration von 1 bis 40 g/L, bevorzugt 5 bis 20 g/L, eingesetzt.

Nach einer weiteren bevorzugten Ausführungsform enthält der Dispersionselektrolyt einen oder mehrere Inhibitoren zur Unterdrückung der Sn⁴⁺-Bildung, die bevorzugt aus organischen Verbindungen der Gruppe der Phenole, mehr bevorzugt aus Hydrochinon, methoxyliertem Hydrochinon, Catechol, methoxyliertem Catechol und Kombinationen davon, ausgewählt sind.

Nach einer weiteren bevorzugten Ausführungsform enthält der Dispersionselektrolyt ferner mindestens ein Leitsalz. Unter einem Leitsalz wird ein wasserlösliches Salz verstanden, das die Leitfähigkeit des Elektrolyten erhöht. Bevorzugt ist das Leitsalz aus Natriumchlorid, Kaliumchlorid, Ammoniumchlorid, Natriumacetat, Kaliumacetat, Ammoniumacetat, Ammoniumfluorid, Ammoniumbifluorid, Natriumfluorid, Kaliumfluorid und Kombinationen davon ausgewählt. Der Elektrolyt umfasst dabei bevorzugt mindestens ein Leitsalz, das aus Ammoniumfluorid, Ammoniumbifluorid und Ammoniumacetat ausgewählt ist. Vorteilhafterweise erhöht das Leitsalz auch die Löslichkeit der Zinn- bzw. Nickelsalze.

Das mindestens eine Leitsalz ist bevorzugt in einer Gesamtkonzentration von 5 bis 70 g/L, mehr bevorzugt 10 bis 65 g/L, noch mehr bevorzugt 40 bis 60 g/L, in dem Elektrolyten enthalten.

Weiterhin kann der Dispersionselektrolyt übliche Additive enthalten, wie sie auch aus herkömmlichen Elektrolyten für das galvanische Abscheiden von Zinn-Nickel-Schichten bekannt sind.

Der Dispersionselektrolyt ist recht flexibel in der Handhabung und erlaubt, die Bedingungen für die galvanische Abscheidung über einen breiten Bereich zu wählen. Der Dispersionselektrolyt weist einen pH-Wert von 3,5 bis 7 auf, sodass er nur schwach sauer ist. Somit kann der Elektrolyt sicher, ohne Bildung von gesundheitsschädlicher Flusssäure (Fluorwasserstoff, HF) betrieben werden. Bei niedrigeren pH-Werten, also unter 3,5, kann es zunehmend zur Bildung von Fluorwasserstoff kommen, falls der Elektrolyt Fluorid-Ionen enthält.

Der Dispersionselektrolyt kann durch Mischen der Bestandteile und Auflösen der Zinn- und Nickelsalze, der Salze des dritten Legierungselements bzw. der weiteren organischen Verbindung, des Dispersionsmittels und ggf. weiterer Komponenten, wie beispielsweise Leitsalz und Komplexbildner, in Wasser gebildet werden. Das Graphitpulver kann als Feststoff zugegeben werden, ohne es vorher zu dispergieren oder zur Dispersion das Gemisch mit Ultraschall zu behandeln. Beim Bilden des Elektrolyten wird vorzugsweise gerührt und bei Bedarf etwas erwärmt, um das Auflösen der Komponenten zu beschleunigen. Die Graphitpartikel werden beim Durchmischen des Elektrolyten dispergiert.

Der pH-Wert kann, falls erforderlich, beispielsweise durch Zugabe von Salzsäure bzw. Natriumhydroxid, Ammoniak, Kaliumhydroxid oder einer wässrigen Lösung davon eingestellt werden. Der erfindungsgemäße Dispersionselektrolyt kann vorteilhafterweise im großen Maßstab hergestellt werden und ist somit für industrielle Anwendungen geeignet. Der Elektrolyt ist lagerfähig, wobei ggf. abgesetzte Graphitpartikel durch Rühren wieder dispergiert werden können.

Weiterhin stellt die vorliegende Erfindung ein Verfahren zur Herstellung eines beschichteten Substrats bereit. Das Verfahren umfasst die Schritte:
(a) das Bereitstellen eines metallischen oder metallisierten Substrats,
(b) das galvanische Beschichten des metallischen oder metallisierten Substrats unter Verwendung des Dispersionselektrolyten nach zumindest einer Ausführungsform der vorliegenden Erfindung, wodurch eine Graphitpartikel-haltige Zinn-Nickel-Legierungsschicht auf mindestens einem Teil der Oberfläche des Substrats ausgebildet wird.

Über das Verfahren ist ein beschichtetes Substrat mit einer Graphitpartikel-haltigen Zinn-Nickel-Legierungsschicht erhältlich, für das die oben beschriebenen Vorteile erhalten werden. Es kann insbesondere ein beschichtetes Substrat sein, wie es unten näher beschrieben ist. Die Graphitpartikel-haltige Zinn-Nickel-Legierungsschicht wird typischerweise als Endschicht, also als äußerste Schicht, auf dem Substrat erzeugt.

Das galvanische Beschichten im Schritt (b) kann mit allen gängigen Vorrichtungen für das galvanische Abscheiden von Zinn-Nickel-Legierungsschichten durchgeführt werden, beispielsweise mittels Gestell- oder Trommelgalvanisierung. Typischerweise wird der Elektrolyt während der Abscheidung durchmischt, beispielsweise gerührt oder mittels einer Vorrichtung umgewälzt. Bevorzugt wird gerührt, beispielsweise mit 100 bis 700 Umdrehungen pro Minute (U/min = rpm).

Das metallische oder metallisierte Substrat wird dabei als Kathode geschaltet. Es kann beispielsweise ein metallisches Bauteil, zum Beispiel eine elektronische Komponente, also beispielsweise ein Kontakt, ein Schalterteil, eine Elektrode, eine Bipolarplatte oder ähnliches sein. Das metallische oder metallisierte Substrat kann ganz oder teilweise aus einem oder mehreren Metallen bestehen. Beispielhafte Metalle sind Aluminium, Silber, Kupfer, Nickel, Edelmetalle wie Palladium oder Platin, Stahl, Edelstahl, Messing und/oder Bronze. Als Substrat kann auch eine Metallschicht verwendet werden, die galvanisch beschichtet werden kann, also beispielsweise ein metallisierter Kunststoff, insbesondere mit einer Metallschicht aus Kupfer, Nickel, Silber und/oder Edelmetallen wie Palladium oder Platin. Die Herstellung von metallisierten Kunststoffen ist beispielsweise in DE 21 26 781 C1 oder WO 2020/225052 A1, insbesondere in den Beispielen, beschrieben.

Die zu beschichtende Oberfläche kann zuvor nach gängigen Methoden gereinigt, beispielsweise entfettet, werden. Das Substrat kann auch vor dem Abscheiden der Graphitpartikel-haltigen Zinn-Nickel-Legierungsschicht mit einer oder mehreren Schichten, zum Beispiel aus Kupfer, Nickel, Palladium und/oder Silber, beschichtet werden, die die Haftung an dem Substrat verbessern können. Ein Beispiel hierfür ist eine sogenannte Strike-Schicht. Solche Schichten können galvanisch auf einem metallischen oder metallisierten Substrat oder auch stromlos (also chemisch), beispielsweise auf einem polaren oder funktionalisierten Kunststoff abgeschieden werden, wie es beispielsweise in DE 21 26 781 C1 oder WO 2020/225052 A1 beschrieben ist.

Als Anode für das galvanische Beschichten im Schritt (b) können beispielsweise Zinnanoden und/oder Nickelanoden verwendet werden. Es können auch mehrere Anoden, bzw. Anoden eines oder einer Kombination der Legierungselemente verwendet werden. Über die Anoden können auch Ionenkonzentrationen gesteuert werden. Salze bzw. die mindestens eine weitere organische Verbindung könnten auch während des Verfahrens kontinuierlich oder portionsweise hinzugefügt werden.

Das galvanische Abscheiden im Schritt (b) wird typischerweise bei einer Temperatur von 5 bis 85°C, bevorzugt 10 bis 85°C, mehr bevorzugt 50 bis 80°C, noch mehr bevorzugt 60 bis 70°C, durchgeführt.

Der Dispersionselektrolyt ermöglicht eine große Flexibilität bei der galvanischen Abscheidung. Die Graphitpartikel-haltige Zinn-Nickel-Legierungsschicht kann insbesondere über einen großen Stromdichtebereich, beispielsweise mit einer Stromdichte von 0,1 bis 10 A/dm², bevorzugt 0,5 bis 5 A/dm², abgeschieden werden. Über die Stromdichte kann beispielsweise der Gehalt an Graphit beeinflusst werden. Grundsätzlich führt eine höhere Stromdichte zu einem höheren Graphitgehalt in der Graphitpartikel-haltigen Zinn-Nickel-Legierungsschicht.

Es wurde weiterhin gefunden, dass eine höhere Konzentration an Zinnionen, den Ionen des dritten Legierungselements bzw. der weiteren organischen Verbindung in dem Elektrolyten tendenziell zu einem niedrigeren Nickelgehalt in einer Graphitpartikel-haltigen Zinn-Nickel-Legierungsschicht führt. Ebenso kann mittels einer vergleichsweise niedrigen Nickelionen-Konzentration in dem Elektrolyten der Nickelgehalt in der Zinn-Nickel-Legierung der Graphitpartikel-haltigen Zinn-Nickel-Legierungsschicht reduziert werden.

Mit dem Verfahren kann die Graphitpartikel-haltige Zinn-Nickel-Legierungsschicht weitgehend homogen, also mit einer recht gleichmäßigen Dicke sowie einer recht gleichmäßigen Verteilung der Graphitpartikel abgeschieden werden. Gemäß einer weiteren Ausführungsform kann die galvanische Abscheidung so durchgeführt werden, dass die Graphitpartikel einen Gradienten aufweisen. Beispielsweise kann die Partikelkonzentration im Innern der Zinn-Nickel-Legierungsschicht höher als an der Außenseite sein. Bevorzugt ist die Partikelkonzentration außen höher als im Innern der Zinn-Nickel-Legierungsschicht.

Ein Gradient kann beispielsweise dadurch erhalten werden, dass die Durchmischung modifiziert, die Stromdichte modifiziert oder während der Abscheidung die Konzentration der Graphitpartikel verändert wird. Eine höhere Durchmischung führt in der Regel zu einer vermehrten Einlagerung der Graphitpartikel. Eine höhere Stromdichte führt in der Regel zu einer vermehrten Abscheidung der Zinn-Nickel-Legierung. Weiterhin können auch mehre Elektrolyte, die sich beispielsweise in dem Graphitgehalt, der Zinnionenkonzentration, der Nickelionenkonzentration und/oder der Konzentration der Ionen des dritten Legierungselements bzw. der weiteren organischen Verbindung unterscheiden, verwendet werden, um das Substrat mehrstufig galvanisch zu beschichten.

Grundsätzlich kann das Verfahren dazu verwendet werden, eine Graphitpartikel-haltige Zinn-Nickel-Legierungsschicht mit beliebiger Schichtdicke zu erzeugen. Beispielsweise kann die Graphitpartikel-haltige Zinn-Nickel-Legierungsschicht mit einer Schichtdicke von bis zu 200 µm oder bis zu 100 µm gebildet werden. Typischerweise wird die Graphitpartikel-haltige Zinn-Nickel-Legierungsschicht mit einer Dicke von 4 bis 50 µm, bevorzugt 5 bis 30 µm und mehr bevorzugt 5 bis 20 µm, abgeschieden. Die Schichtdickenmessung erfolgt mittels Röntgenfluoreszenzmessung gemäß DIN EN ISO 3497 (2001-12), beispielsweise mit einem Fischerscope X-Ray Röntgenfluoreszenzmessgerät XDAL für Schichtdicken bis 20 µm. Bei Schichtdicken von mehr als 20 µm wird die Schichtdicke am Querschnitt der Schicht mit einem Mikroskop bestimmt. Typischerweise wird so abgeschieden, dass die Dicke der Zinn-Nickel-Legierungsschicht größer als die Partikel ist. Bei unebenen Schichtoberflächen bezieht sich die Schichtdicke auf eine Mittelfläche bzw. eine Mittellinie beim Querschnitt der entsprechenden Oberfläche.

Als weiterer Aspekt der vorliegenden Erfindung wird ein beschichtetes Substrat angegeben. Das beschichtete Substrat umfasst ein metallisches oder metallisiertes Substrat und eine Graphitpartikel-haltige Zinn-Nickel-Legierungsschicht, die zumindest auf einem Teil der Oberfläche des Substrats ausgebildet ist. Die Graphitpartikel-haltige Zinn-Nickel-Legierungsschicht enthält eine Zinn-Nickel-Legierung und Graphitpartikel und besteht bevorzugt daraus. Die Zinn-Nickel-Legierung umfasst, bezogen auf die Zinn-Nickel-Legierung,
- 5 bis 40 Gew.-% Nickel,
- 0,1 bis 30 Gew.-% eines dritten Legierungselements, ausgewählt aus Cobalt (Co), Mangan (Mn), Kupfer (Cu), Chrom (Cr), Molybdän (Mo), Kohlenstoff (C), Bismut (Bi), Antimon (Sb), Selen (Se), Tellur (Te), Silber (Ag), Germanium (Ge) und Kombinationen davon, und
- 35 bis 75 Gew.-% Zinn.

Die Zinn-Nickel-Legierung besteht bevorzugt zu mindestens 96 Gew.-%, mehr bevorzugt zu mindestens 98 Gew.-%, oder ganz aus Zinn, Nickel, dem mindestens einen dritten Legierungselement und unvermeidbaren Verunreinigungen.

Unvermeidbare Verunreinigungen können sich beispielsweise durch Zersetzung von Elektrolytbestandteilen ergeben und beispielsweise zum Einbau von Kohlenstoff, Sauerstoff, Stickstoff, Schwefel, Phosphor, Fluor, Chlor und/oder Bor führen. Das heißt, es kann auch ohne den Einsatz der oben beschriebenen weiteren organischen Verbindung im Dispersionselektrolyten zu einem gewissen Einbau von Kohlenstoff in die Zinn-Nickel-Legierung kommen, beispielsweise aufgrund einer anteiligen Zersetzung des Dispergiermittels. Der Kohlenstoffgehalt ist dann jedoch typischerweise geringer, als wenn gezielt eine der weiteren organischen Verbindungen verwendet wird. Wird in dem Dispersionselektrolyten keine weitere organische Verbindung eingesetzt, so wird ein etwaiger Kohlenstoffgehalt in der Zinn-Nickel-Legierung als unvermeidbare Verunreinigung angesehen.

Die Graphitpartikel-haltige Zinn-Nickel-Legierungsschicht bildet typischerweise eine Endschicht, also eine äußerste Schicht, des beschichteten Substrats. Sie kann die Oberfläche teilweise oder vollständig bedecken. Bevorzugt wird die Graphitpartikel-haltige Zinn-Nickel-Legierungsschicht als durchgehende, nicht poröse Schicht abgeschieden. Sie ist insbesondere mechanisch stabil und weist im sauren, neutralen und im alkalischen Bereich eine gute Korrosionsbeständigkeit auf.

Das beschichtete Substrat mit der Graphitpartikel-haltigen Zinn-Nickel-Legierungsschicht ist durch das Verfahren zur Herstellung eines beschichteten Substrats unter Verwendung des Dispersionselektrolyten nach zumindest einer hierin beschrieben Ausführungsform erhältlich. Es werden daher die oben beschriebenen Vorteile erhalten. Das Substrat ist, wie oben beschrieben, ein metallisches oder metallisiertes Substrat, das mit der Graphitpartikel-haltigen Zinn-Nickel-Legierungsschicht zumindest teilweise beschichtet ist.

Weiterhin haben die oben beschriebenen optionalen und bevorzugten Ausführungsformen in analoger Weise für das beschichtete Substrat Geltung. Das gilt insbesondere für das Substrat, das mit der Graphitpartikel-haltigen Zinn-Nickel-Legierungsschicht beschichtet ist, die Schichtdicken, die Partikelgrößen, den optionalen Gradienten der Partikel und die Ausführungsformen, betreffend die dritten Legierungselemente.

Wie oben ausgeführt, weist die Graphitpartikel-haltige Zinn-Nickel-Legierungsschicht eine hohe Korrosionsbeständigkeit auf und reduziert bzw. verlangsamt ein Nickel-Leaching, sodass es beim Einsatz in elektrochemischen Zellen zu einer reduzierten bzw. verlangsamten Vergiftung einer Polymerelektrolytmembran mit Nickel kommt. Weiterhin werden im Vergleich zu einer entsprechenden Schicht ohne Graphitpartikel ein geringerer Kontaktwiderstand und verbesserte tribologische Eigenschaften beobachtet.

Die Graphitpartikel-haltige Zinn-Nickel-Legierungsschicht enthält bevorzugt 0,1 bis 8 Gew.-%, mehr bevorzugt 0,5 bis 4 Gew.-% und noch mehr bevorzugt 0,8 bis 3 Gew.-%, Graphitpartikel, bezogen auf das Gesamtgewicht der Graphitpartikel-haltigen Zinn-Nickel-Legierungsschicht. Bei diesem Gehalt können die elektrische Leitfähigkeit, der Kontaktwiderstand gegenüber anderen Metallen und die tribologischen Eigenschaften verbessert werden.

Die Zinn-Nickel-Legierung enthält bevorzugt 10 bis 30 Gew.-%, mehr bevorzugt 20 bis 28 Gew.-%, Nickel und bevorzugt 0,4 bis 20 Gew.-%, mehr bevorzugt 0,7 bis 15 Gew.-%, noch mehr bevorzugt 1,0 bis 10 Gew.-%, des mindestens einen dritten Legierungselements. Der Zinngehalt der Zinn-Nickel-Legierung kann bevorzugt 40 bis 70 Gew.-%, mehr bevorzugt 45 bis 65 Gew.-% oder 50 bis 70 Gew.-%, bezogen auf die gesamte Zinn-Nickel-Legierung, betragen. Der Nickelgehalt der Zinn-Nickel-Legierung ist also bevorzugt geringer als bei einer binären Zinn-Nickel-Legierung mit Zinn und Nickel im Molverhältnis 1:1, was ein Nickel-Leaching reduziert.

Nach einer bevorzugten Ausführungsform besteht die Zinn-Nickel-Legierung aus 5 bis 40 Gew.-%, bevorzugt 10 bis 30 Gew.-%, mehr bevorzugt 20 bis 28 Gew.-%, Nickel, 0,1 bis 30 Gew.-%, bevorzugt 0,4 bis 20 Gew.-%, mehr bevorzugt 0,7 bis 15 Gew.-%, noch mehr bevorzugt 1,0 bis 10 Gew.-%, des mindestens einen dritten Legierungselements, und zum Rest aus Zinn und unvermeidbaren Verunreinigungen.

Nach einer bevorzugten Ausführungsform ist das dritte Legierungselement aus Co, Cu, Cr, C, Bi, Sb, Ag und Kombinationen davon, bevorzugt aus Co, Sb, Ag und Kombinationen davon, ausgewählt. Hierdurch kann ein Nickel-Leaching besonders gut reduziert bzw. die Korrosionsbeständigkeit erhöht werden. Das drittes Legierungselement ist mehr bevorzugt Co, Sb oder Ag.

Nach einer weiteren besonders bevorzugten Ausführungsform besteht die Zinn-Nickel-Legierung aus
- 20 bis 30 Gew.-%, bevorzugt 24 bis 28 Gew.-%, Nickel,
- 0,7 bis 15 Gew.-%, bevorzugt 1,0 bis 10 Gew.-%, Cobalt, und zum Rest aus Zinn und unvermeidbaren Verunreinigungen.

Nach einer weiteren besonders bevorzugten Ausführungsform besteht die Zinn-Nickel-Legierung aus
- 20 bis 30 Gew.-%, bevorzugt 24 bis 28 Gew.-%, Nickel,
- 0,4 bis 10 Gew.-%, bevorzugt 0,6 bis 3 Gew.-%, Silber, und zum Rest aus Zinn und unvermeidbaren Verunreinigungen.

Nach einer weiteren besonders bevorzugten Ausführungsform besteht die Zinn-Nickel-Legierung aus
- 20 bis 30 Gew.-%, bevorzugt 24 bis 28 Gew.-%, Nickel,
- 0,7 bis 10 Gew.-%, bevorzugt 1,0 bis 5 Gew.-%, Antimon, und zum Rest aus Zinn und unvermeidbaren Verunreinigungen.

Wie oben bereits ausgeführt, wurde überraschend gefunden, dass die Graphitpartikel-haltige Zinn-Nickel-Legierungsschicht eine sehr gute Beständigkeit, insbesondere gegen korrosive Medien, aufweist. Die Korrosionsbeständigkeit kann im Vergleich zu herkömmlichen Legierungen von Zinn und Nickel mit entsprechenden Graphitpartikeln verbessert werden. Weiterhin weist die Graphitpartikel-haltige Zinn-Nickel-Legierungsschicht sehr gute mechanische und elektrische Eigenschaften auf. Es wurde insbesondere gefunden, dass die Graphitpartikel-haltige Zinn-Nickel-Legierungsschicht sehr gute tribologische Eigenschaften und einen niedrigen Kontaktwiderstand aufweist.

Die Graphitpartikel-haltige Zinn-Nickel-Legierungsschicht weist bevorzugt eine mittlere Reibzahl von 1,5 oder weniger, mehr bevorzugt 1,0 oder weniger, auf. Die Reibzahl wird nach dem unten angegebenen Verfahren bestimmt. Die Reibzahl kann insbesondere über die Größe und die Menge der Graphitpartikel eingestellt werden. Größere Partikel bzw. eine höhere Menge an Graphitpartikeln führen in der Regel zu einer niedrigeren Reibzahl.

Überraschend wurde gefunden, dass diese Eigenschaften auch mit einer guten Härte kombiniert werden können. Die Graphitpartikel-haltige Zinn-Nickel-Legierungsschicht weist bevorzugt eine Vickers-Härte von HV 150 oder mehr, mehr bevorzugt von HV 200 oder mehr, auf. Dabei enthält die Zinn-Nickel-Legierung bevorzugt insgesamt 30 bis 40 Gew.-% an Nickel und drittes Legierungselement. Die Vickers-Härte wird nach dem unten angegebenen Verfahren bestimmt.

Die Härte, die mittlere Reibzahl und der Kontaktwiderstand der Zinn-Nickel-Schicht können beispielsweise über den Graphitgehalt in der Schicht sowie die Größe der Graphitpartikel eingestellt werden.

Die Graphitpartikel-haltige Zinn-Nickel-Legierungsschicht weist insbesondere weniger als 30, bevorzugt weniger als 10, mehr bevorzugt weniger als 5, Poren pro cm² Schichtoberfläche auf und ist daher nicht porös. Als Poren werden alle Poren mit einem Durchmesser von 1,0 µm oder mehr verstanden, die sich durch die gesamte abgeschiedene Schicht erstrecken. Die Bestimmung erfolgt mittels REM-EDX, also einer Kombination von Rasterelektronenmikroskopie und energiedispersiver Röntgenanalyse, sowie nach DIN EN 4526:2006. Die Porenzahl kann insbesondere durch Erhöhen der Schichtdicke, mit den oben genannten, bevorzugten Abscheidungsbedingungen und/oder den bevorzugten anionischen Dispergiermitteln erhalten werden.

Die mit dem erfindungsgemäßen Elektrolyten gebildeten Graphitpartikel-haltigen Zinn-Nickel-Legierungsschichten eignen sich, wie oben ausgeführt, für verschiedene Anwendungen. Da das beschichtete Substrat eine sehr gute Korrosionsbeständigkeit aufweist und zu einem reduzierten bzw. verlangsamten Nickel-Leaching führt, eignet es sich insbesondere als Bauteil für eine elektrochemische Zelle. Beispiele für elektrochemische Zellen sind Redox-Flow-Batterien, Elektrolysezellen, insbesondere für die elektrolytische Spaltung von Wasser zur Produktion von Wasserstoff, und Brennstoffzellen. Das Bauteil wird dabei insbesondere als Elektrode, Bipolarplatte oder einem anderen Teil, der korrosiven Medien ausgesetzt ist, bevorzugt als Elektrode oder Bipolarplatte, verwendet.

Weitere Anwendungsgebiete sind beispielsweise elektrische Verbindungstechnologien, Katalysatorschichten sowie Steckverbindungen, Schaltkontakte, Steckkontakte, Schleifkontakte und Gleitelemente. Gleitelemente sind beispielsweise Gleitschienen oder Gleitlager.

Als weiterer Aspekt der vorliegenden Erfindung wird daher eine elektrochemische Zelle angeben, die das beschichtete Substrat gemäß zumindest einer Ausführungsform der Erfindung, insbesondere als Elektrode oder Bipolarplatte umfasst. Die elektrochemische Zelle ist bevorzugt eine Redox-Flow-Batterie, eine Elektrolysezelle, insbesondere für die elektrolytische Spaltung von Wasser zur Produktion von Wasserstoff, oder eine Brennstoffzelle. Weiter bevorzugt umfasst die elektrochemische Zelle eine Polymerelektrolytmembran. Als weitere Aspekte werden eine Elektrode (die für elektrochemische Zellen vorgesehen sein kann oder auch nicht für elektrochemische Zellen vorgesehen sein kann), eine Bipolarplatte, ein Steckkontakt, ein Schaltkontakt, ein Schleifkontakt oder ein Gleitelement angegeben, die das beschichtete Substrat nach zumindest einer Ausführungsform der Erfindung umfassen oder daraus bestehen.

Als weiterer Aspekt der vorliegenden Anmeldung wird die Verwendung des Dispersionselektrolyten nach zumindest einer Ausführungsform der Erfindung angegeben. Bevorzugt wird der Dispersionselektrolyt für die Herstellung einer elektrochemischen Zelle, bevorzugt wie oben angegeben, verwendet.

Der Dispersionselektrolyt wird bevorzugt für die galvanische Beschichtung eines Bauteils einer elektrochemischen Zelle, insbesondere eine Elektrode oder eine Bipolarplatte, verwendet. Dabei wird das Bauteil mit der Graphitpartikel-haltigen Zinn-Nickel-Legierungsschicht beschichtet, die bevorzugt eine Endschicht, also eine äußerste Schicht, bildet.

Weiterhin wird der Dispersionselektrolyt bevorzugt für die galvanische Beschichtung einer Elektrode (die zum Beispiel nicht für elektrochemische Zellen vorgesehen ist), eines Steckkontakts, eines Schaltkontakts, eines Schleifkontakts oder eines Gleitelements verwendet. Dabei wird ein Bauteil mit der Graphitpartikel-haltigen Zinn-Nickel-Legierungsschicht beschichtet, die bevorzugt eine Endschicht, also eine äußerste Schicht, bildet.

Demgemäß wird auch das beschichtete Substrat nach mindestens einer Ausführungsform der Erfindung für eine Elektrode (die zum Beispiel nicht für elektrochemische Zellen vorgesehen ist), einen Steckkontakt, einen Schaltkontakt, einen Schleifkontakt oder ein Gleitelement verwendet.

### Beispiele

Die vorliegende Erfindung wird nachfolgend durch Beispiele verdeutlicht. Sie ist nicht auf diese Beispiele begrenzt.

### Messverfahren

Zur Bestimmung der Schichtdicke und der Zusammensetzung der abgeschiedenen Schichten wurden die folgenden Messverfahren verwendet.

### 1) Schichtdicke

Die Schichtdickenmessung erfolgte mit einem Fischerscope X-Ray Röntgenfluoreszenzmessgerät XDAL gemäß DIN EN ISO 3497 (2001-12). Es wird ein gemittelter Messwert angegeben.

### 2) Zusammensetzung

Die Analyse der Zusammensetzung der Graphitpartikel-haltigen Zinn-Nickel-Legierungsschicht erfolgte ebenfalls per Röntgenfluoreszenzanalyse auf der beschichteten Substratoberfläche mit dem vorstehend genannten Gerät gemäß DIN EN ISO 3497 (2001-12). Die vermessene Fläche betrug etwa 200 x 150 µm. Die Messwerte werden mit einer Genauigkeit von ± 2 Gew.-% oder besser erhalten.

### Vorbereitung der metallischen Substrate

Es wurden Stahlbleche (DC03) mit einer Größe von 50 x 120 x 0,4 mm für die Versuche verwendet und wie folgt vorbehandelt:

| | | | | |
|---|---|---|---|---|
| 1 | Entfetten | Entfetter SLOTOCLEAN AK 160 (02040) | 65°C | 5 min |
| 2 | Spülen | Wasser | RT* | |
| 3 | Beizen | wässrige HCl, 18%-ig, mit SLOTOCLEAN BEF 30 (01001) | RT | 30 s |
| 4 | Spülen | Wasser | RT | |
| 5 | Anodisches Entfetten | Entfetter SLOTOCLEAN EL DCG (02037), 8 A/dm² | RT | 2 min |
| 6 | Spülen | Wasser | RT | |
| 7 | Dekapieren | wässrige HCl, 10%-ig | RT | 30 s |
| 8 | Spülen | Wasser | RT | |
| 9 | Abscheidung Zwischenschicht | Nickel Strike, 3 A/dm² | RT | 6 min |

| | | | | |
|---|---|---|---|---|
| *RT = Raumtemperatur | | | | |

### Reagenzien

Für die Versuche wurden u.a. die folgenden Reagenzien verwendet.

Slotoclean AK 160 (enthält NaOH und Dinatriummetasilikat), SLOTOCLEAN EL DCG (enthält NaOH, Dinatriummetasilikat und Natriumcarbonat), und SLOTOCLEAN BEF 30 (enthält But-2-in-1,4-diol und Isotridecanol ethoxyliert) sind Produkte der Fa. Dr.-Ing. Max Schlötter.

Nickel Strike: Nickelelektrolyt für die galvanische Abscheidung der Zwischenschicht, Fa. Dr.-Ing. Max Schlötter, enthaltend 180 g/L NiCl₂·6H₂O nach DIN 50970, 8 g/L HCl (konzentriert), Wasser

SLOTOLOY NIT 11: Badzusatz der Fa. Dr.-Ing. Max Schlötter für glänzende Zinn-Nickel-Schichten, enthaltend Diethylentriamin als Komplexbildner, Ammoniumhydrogendifluorid als Leitsalz, Salzsäure.

SLOTOLOY NITC 2571: Badzusatz der Fa. Dr.-Ing. Max Schlötter, enthaltend Ammoniumbifluorid als Leitsalz (15 bis 20 Gew.-%) und ein Polyamin als Komplexbildner (15 bis 20 Gew.-%).

SLOTOLOY NITC 2572: Badzusatz der Fa. Dr.-Ing. Max Schlötter, enthaltend als anionisches Dispergiermittel ein Natriumsalz eines Polymerisat einer aromatischen Sulfonsäure (20 bis 25 Gew.-%).

SLOTOLOY NITC 2573: Badzusatz der Fa. Dr.-Ing. Max Schlötter, enthaltend als anionisches Dispergiermittel ein Natriumsulfat eines Fettalkohols mit 6 bis 20 Kohlenstoffatomen (15 bis 20 Gew.-%).

Tamol^{®}: Naphthalinsulfonsäure-Formaldehyd-Polykondensate (Natriumsalze) der BASF SE

Graphit: Natürlicher Graphit UF1, 3 µm

### Beispiel 1

Für das Beispiel 1 wurde ein Elektrolyt mit den folgenden Komponenten in einem Kunststoffbecherglas (2 L) angesetzt.
- 250 mL/L SLOTOLOY NIT 11 (Badzusatz)
- 48 g/L SnCl₂·2H₂O (entsprechend 25 g/L Sn²⁺)
- 194 g/L NiCl₂·6H₂O (entsprechend 48 g/L Ni²⁺)
- 50 g/L CoSO₄·7H₂O (entsprechend 10 g/L Co²⁺)
- 0,9 g/L Tamol^{®} (Dispergiermittel)
- destilliertes Wasser
- 40 g/L Graphit

Hierfür wurden zunächst Wasser (400 mL/L Elektrolyt) vorgelegt und auf 65°C erwärmt. Es wurden SnCl₂·2H₂O, NiCl₂·6H₂O, CoSO₄·7H₂O, der Badzusatz und das Dispergiermittel zugegeben, der pH mit KOH auf 4,6 eingestellt und Graphit unter Rühren (250 U/min) hinzugefügt. Die Temperatur der Mischung wurde dabei durchgehend auf 65°C gehalten. Die Elektrolytmenge betrug jeweils 2 L.

Es wurden Stahlbleche, wie oben beschrieben, vorbehandelt und dann galvanisch unter den Bedingungen von 65°C und 1,0 A/dm² für 30 min beschichtet. Der Elektrolyt wurde dabei unter Verwendung eines Rührstäbchens (40 mm) durchmischt (250 U/min). Die Stahlbleche wurden jeweils als Kathode geschaltet und 10 cm tief in den Elektrolyten eingetaucht. Als Anode dienten zwei Ni-Elektroden (50 x 120 x 5 mm), die beidseitig parallel zur Kathode jeweils mit einem Abstand von 4 cm angeordnet wurden. Die Eintauchtiefe der Anoden betrug ebenfalls 10 cm. Die beiden parallel geschalteten Anoden wurden in Reihe mit dem Elektrolyten, der Kathode und einer Gleichstromquelle geschaltet.

Es wurden durchgehende, nicht poröse (< 5 Poren pro cm²) Graphitpartikel-haltige Zinn-Nickel-Legierungsschichten mit einer Schichtdicke von 8,5 µm auf den Stahlblechen abgeschieden.

Die Zusammensetzung der abgeschiedenen Schichten betrug: 27 Gew.-% Ni, 3,6 Gew.-% Co, 67 Gew.-% Sn, 2,4 Gew.-% C (Graphit und ggf. Kohlenstoff als unvermeidbare Verunreinigung).

### Beispiel 2

Für das Beispiel 2 wurde ein Elektrolyt mit den folgenden Komponenten in einem Kunststoffbecherglas (2 L) angesetzt.
- 250 mL/L SLOTOLOY NIT 11 (Badzusatz)
- 48 g/L SnCl₂·2H₂O (entsprechend 25 g/L Sn²⁺)
- 194 g/L NiCl₂·6H₂O (entsprechend 48 g/L Ni²⁺)
- 5 g/L Ag₂SO₄ (entsprechend 3,5 g/L Ag⁺)
- 0,9 g/L Tamol^{®} (Dispergiermittel)
- destilliertes Wasser
- 40 g/L Graphit

Der Elektrolyt wurde analog zum Beispiel 1 angesetzt und dann Stahlbleche analog zu der Vorgehensweise im Beispiel 1 beschichtet.

Es wurden durchgehende, nicht poröse (< 5 Poren pro cm²) Graphitpartikel-haltige Zinn-Nickel-Legierungsschichten mit einer Schichtdicke von 8,3 µm auf den Stahlblechen abgeschieden.

Die Zusammensetzung der abgeschiedenen Schichten betrug: 27 Gew.-% Ni, 0,7 Gew.-% Ag, 70 Gew.-% Sn, 2,3 Gew.-% C (Graphit und ggf. Kohlenstoff als unvermeidbare Verunreinigung).

### Vergleichsbeispiel

Für das Vergleichsbeispiel wurde ein Elektrolyt mit den folgenden Komponenten in einem Kunststoffbecherglas (2 L) angesetzt.
- 250 mL/L SLOTOLOY NITC 2571 (Badzusatz)
- 20 mL/L SLOTOLOY NITC 2572 (Badzusatz)
- 20 mL/L SLOTOLOY NITC 2573 (Badzusatz)
- 48 g/L SnCl₂·2H₂O (entsprechend 25 g/L Sn²⁺)
- 243 g/L NiCl₂·6H₂O (entsprechend 60 g/L Ni²⁺)
- 0,9 g/L Tamol^{®} (Dispergiermittel)
- destilliertes Wasser
- 40 g/L Graphit

Der Elektrolyt wurde analog zum Beispiel 1 angesetzt und dann Stahlbleche analog zu der Vorgehensweise im Beispiel 1 beschichtet.

Es wurden durchgehende, nicht poröse (< 5 Poren pro cm²) Graphitpartikel-haltige Zinn-Nickel-Legierungsschichten mit einer Schichtdicke von 8,4 µm auf den Stahlblechen abgeschieden.

Die Zusammensetzung der abgeschiedenen Schichten betrug: 35 Gew.-% Ni, 62,5 Gew.-% Sn, 2,5 Gew.-% C (Graphit und ggf. Kohlenstoff als unvermeidbare Verunreinigung). Die Zinn-Nickel-Legierung des Vergleichsbeispiels enthielt also mehr Nickel als die Zinn-Nickel-Legierungen der Beispiele 1 und 2 und, abgesehen von etwaigen geringen Mengen an unvermeidbaren Verunreinigungen, kein drittes Legierungselement.

### Nickel-Leaching

Jeweils ein beschichtetes Stahlblech der Beispiele 1 und 2 und des Vergleichsbeispiels 1 wurden für 90 Stunden mit dem beschichteten Teil in 100 mL verdünnte wässrige Schwefelsäure (1M H₂SO₄) eingetaucht. Die eingetauchte Fläche betrug jeweils 30 cm², was einer Eintauchtiefe von 3,0 cm entspricht. Nach dem Entnehmen der Bleche wurde jeweils die Konzentration der Ni²⁺-Ionen [Ni²⁺] per ICP-MS (Avio 550 Max, PerkinElmer) bestimmt. Die Ergebnisse sind in Tabelle 1 zusammengefasst.

**Tabelle 1**

| | Konzentration [Ni²⁺] |
|---|---|
| Beispiel 1 | 6,8 mg/L |
| Beispiel 2 | 9,6 mg/L |
| Vergleichsbeispiel | 22,8 mg/L |

Es wurden gefunden, dass unter den hochkorrosiven Bedingungen die beschichteten Substrate der Beispiele 1 und 2 deutlich weniger Nickel-Ionen als das beschichte Substrat des Vergleichsbeispiels abgaben. Somit zeigen die beschichten Substrate der Beispiele 1 und 2 ein geringeres Nickel-Leaching. In den Beispielen 1 und 2 wurde die Menge des herausgelösten Nickels im Vergleich zum Nickelgehalt der abgeschiedenen Schichten überproportional stark reduziert.

### Korrosionspotential

Die Messung des Korrosionspotentials erfolgte mit einem Potentiostaten (Metrohm PGSTAT204) und wurde jeweils an einem weiteren beschichteten Stahlblech der Beispiele 1 und 2 und des Vergleichsbeispiels durgeführt. Die beschichteten Stahlbleche wurden jeweils in eine elektrochemische Zelle mit einer Pt-Gegenelektrode eingebaut. Als Referenzelektrode wurde Ag/AgCl verwendet. Die Messung erfolgte jeweils an einer kreisförmigen Fläche von 3 cm² in 0,5M H₂SO₄.

Es wurde zunächst das Ruhepotential (OCP, Open Circuit Potential) bestimmt. Dann wurde eine Linear-Sweep-Voltametrie (LSV)-Messung im Bereich von -0,3 bis +0,3 V vs. OCP mit einer Scanrate von 0,0005 V/s in Schritten von 0,001 V durchgeführt. Das Korrosionspotential wurde über die Software des Potentiostaten ausgewertet. Es entspricht der Peakposition, welche durch logarithmisches Auftragen des Stromflusses (in A) über das angelegte Potential (in V)erhalten wird. Das Potential wurde gegenüber Ag/AgCl (vs. Ag/AgCl) und umgerechnet gegenüber die Normal-Wasserstoff-Elektrode (vs. SHE) bestimmt. Die Ergebnisse sind in Tabelle 2 zusammengefasst.

**Tabelle 2**

| | Korrosionspotential [vs. Ag/AgCl] | Korrosionspotential [vs. SHE] |
|---|---|---|
| Beispiel 1 | -0,053 V | 0,153 V |
| Beispiel 2 | -0,040 V | 0,167 V |
| Vergleichsbeispiel | -0,065 V | 0,142 V |

In den Beispielen 1 und 2 wurde das Korrosionspotential gegenüber dem Vergleichsbeispiel erhöht. Dies geht mit einer entsprechenden Verringerung der Korrosionsrate einher. Somit konnten trotz der geringeren Nickelgehalte für die Beispiele 1 und 2 eine verbesserte Korrosionsbeständigkeit erhalten werden.

### Tribologische Eigenschaften

Die Messungen zur Tribologie bzw. der mittleren Reibzahl wurden mit einem von iChem Analytics entwickelten Tribologie-Prüfstand durchgeführt, mit dem Reibzahlen und Kontaktwiderstände zyklisch gemessen und in Einzelzyklen aufgelöst betrachtet werden können. Dabei wird in dem Tribologie-Prüfstand eine Kugel entlang einer geraden Messstrecke (Reiblänge) über die zu untersuchende Oberfläche gerieben. Als Gegenkörper wurde eine Kugel mit einem Durchmesser von 6 mm der Legierung 100 Cr6, Werkstoffnummer 1.3505, verwendet. Es wurden die folgenden Parameter verwendet:
Normalkraft: 1,5 N
Temperatur: 23°C ± 2°C
rel. Feuchte: 50% ± 6%
Reiblänge: 2 mm
Frequenz: 1 Hz

Die mittlere Reibzahl wurde in einem Dauertest mit 10.000 Zyklen an drei unter identischen Bedingungen abgeschiedenen Proben durchgeführt und der Mittelwert gebildet. Die mittlere Reibzahl (µ) ist dimensionslos. Die Ergebnisse sind in Tabelle 3 zusammengefasst.

**Tabelle 3**

| | mittlere Reibzahl (µ) 5.000 Zyklen | mittlere Reibzahl (µ) 8.000 Zyklen | mittlere Reibzahl (µ) 10.000 Zyklen |
|---|---|---|---|
| Beispiel 1 | 0,76 ± 0.07 | 0,791 ± 0,062 | 0,813 ± 0,042 |
| Beispiel 2 | 0,71 ± 0.06 | 0,786 ± 0,010 | 0,787 ± 0,020 |
| Vergleichsbeispiel | 0,76 ± 0.05 | 0,781 ± 0,078 | 0,768 ± 0,098 |

Es wurde gefunden, dass die beschichten Substrate der Beispiele 1 und 2 eine niedrige mittlere Reibzahl und somit sehr gute tribologische Eigenschaften, also Beständigkeit gegenüber Reibung und mechanischen Verschleiß, aufweisen. Die tribologischen Eigenschaften sind mit denen des Vergleichsbeispiels vergleichbar.

### Kontaktwiderstand

Der Kontaktwiderstand wurde mit dem oben beschriebenen Prüfstand mit der Kugel der Legierung 100 Cr6 bei verschiedenen Anpressdrücken gemessen. Die Messungen erfolgten vor den Reibwert Messungen an jeweils unterschiedlichen Stellen der beschichteten Substrate. Es wurden Messungen an jeweils drei verschiedenen Proben durchgeführt und der Mittelwert gebildet. Die Ergebnisse sind in Tabelle 4 zusammengefasst.
Anpressdruck: 0,5 N oder 1,2 N
Temperatur: 23°C ± 2°C
rel. Feuchte: 50% ± 6%

**Tabelle 4**

| | Kontaktwiderstand 0.5 N Anpressdruck | Kontaktwiderstand 1.2 N Anpressdruck |
|---|---|---|
| Beispiel 1 | 0,20 ± 0,06 Ω | 0,09 ± 0,02 Ω |
| Beispiel 2 | 0,23 ± 0,07 Ω | 0,12 ± 0,05 Ω |
| Vergleichsbeispiel | 0,26 ± 0,06 Ω | 0,13 ± 0,05 Ω |

Für die Beispiele 1 und 2 wurden niedrige Kontaktwiderstände gemessen und keine nachteilige Veränderung gegenüber dem Vergleichsbeispiel beobachtet.

### Vickers-Härte

Die Härteprüfung wurde nach DIN EN ISO 14577-1 (2015-11) auf der Oberfläche, ggf. nach Polieren (also Konditionieren) der Oberfläche, der jeweiligen abgeschiedenen Schicht durchgeführt. Die Angabe der Vickers-Härte erfolgt durch das Formelzeichen "HV". Die verwendete Prüfkraft von 0,3 kg entspricht 2,94 N (multipliziert mit einem Proportionalitätsfaktor von 0,102). Die Vickers-Härte wird dimensionslos angegeben. Für jede Probe wurden 5 Eindrücke vorgenommen und der Mittelwert gebildet. Die Ergebnisse sind in Tabelle 5 zusammengefasst.

**Tabelle 5**

| | Vickers-Härte (HV) |
|---|---|
| Beispiel 1 | 217 ± 36 |
| Beispiel 2 | 222 ± 18 |
| Vergleichsbeispiel | 206 ± 34 |

Die beschichteten Substrate der Beispiele 1 und 2 weisen trotz der Graphitpartikel eine gute Härte auf. Es wurde keine nachteilige Veränderung der Härte gegenüber dem Vergleichsbeispiel beobachtet.

## Patentansprüche

1. Dispersionselektrolyt für das galvanische Abscheiden von Graphitpartikel-haltigen Zinn-Nickel-Legierungsschichten, umfassend:
- Sn²⁺-Ionen in einer Konzentration von 2 bis 50 g/L;
- Ni²⁺-Ionen in einer Konzentration von 0,2 bis 70 g/L;
- Graphitpartikel in einer Konzentration von 5 bis 200 g/L;
- mindestens ein Dispergiermittel, ausgewählt aus anionischen Dispergiermitteln, nichtionischen Dispergiermitteln und Kombinationen davon, in einer Gesamtkonzentration von 0,3 bis 100 g/L;
- Ionen eines dritten Legierungselements in einer Gesamtkonzentration von 0,1 bis 150 g/L und/oder mindestens eine weitere organische Verbindung in einer Gesamtkonzentration von 1 bis 100 g/L,
wobei die Ionen des dritten Legierungselements aus Cobalt (Co²⁺)-, Mangan (Mn²⁺)-, Kupfer (Cu²⁺)-, Chrom (Cr³⁺)-, Molybdän (Mo²⁺)-, Bismut (Bi³⁺)-, Antimon (Sb³⁺)-, Selen (Se³⁺)-, Tellur (Te²⁺)-, Silber (Ag⁺)- und Germanium (Ge²⁺)-Ionen und Kombinationen davon ausgewählt sind, und
wobei die mindestens eine weitere organische Verbindung von dem mindestens einen Dispergiermittel verschieden ist und beim galvanischen Abscheiden zersetzt wird und als Quelle von Kohlenstoff als ein drittes Legierungselement der Zinn-Nickel-Legierung dient; und
- Wasser;
wobei der Dispersionselektrolyt einen pH-Wert von 3,5 bis 7 aufweist.

2. Dispersionselektrolyt gemäß Anspruch 1, wobei der Dispersionselektrolyt Sn²⁺-Ionen in einer Konzentration von 5 bis 45 g/L, bevorzugt 20 bis 30 g/L, und/oder Ni²⁺-Ionen in einer Konzentration von 10 bis 65 g/L, bevorzugt 40 bis 55 g/L, enthält.

3. Dispersionselektrolyt gemäß Anspruch 1 oder 2,
wobei der Dispersionselektrolyt als Ionen des dritten Legierungselements mindestens eines der folgenden enthält:
- 1 bis 50 g/L, bevorzugt 3 bis 20 g/L, mehr bevorzugt 5 bis 15 g/L, Co²⁺-Ionen,
- 0,1 bis 20 g/L, bevorzugt 0,1 bis 5 g/L, mehr bevorzugt 0,1 bis 2 g/L, Cu²⁺-Ionen,
- 1 bis 50 g/L, bevorzugt 3 bis 20 g/L, mehr bevorzugt 10 bis 20 g/L, Cr³⁺-Ionen,
- 1 bis 50 g/L, bevorzugt 3 bis 20 g/L, mehr bevorzugt 5 bis 15 g/L, Mn²⁺-Ionen,
- 1 bis 50 g/L, bevorzugt 3 bis 20 g/L, mehr bevorzugt 5 bis 15 g/L, Mo²⁺-Ionen,
- 1 bis 50 g/L, bevorzugt 3 bis 20 g/L, mehr bevorzugt 10 bis 20 g/L, Bi³⁺-Ionen,
- 1 bis 50 g/L, bevorzugt 3 bis 20 g/L, mehr bevorzugt 10 bis 20 g/L, Sb³⁺-Ionen,
- 0,5 bis 40 g/L, bevorzugt 1 bis 20 g/L, mehr bevorzugt 2 bis 15 g/L, Ag⁺-Ionen,
- 1 bis 50 g/L, bevorzugt 3 bis 20 g/L, mehr bevorzugt 5 bis 15 g/L, Se²⁺-Ionen,
- 1 bis 50 g/L, bevorzugt 3 bis 20 g/L, mehr bevorzugt 5 bis 15 g/L, Te²⁺-Ionen, und/oder
- 1 bis 50 g/L, bevorzugt 3 bis 20 g/L, mehr bevorzugt 5 bis 15 g/L, Ge²⁺-Ionen.

4. Dispersionselektrolyt gemäß einem der Ansprüche 1 bis 3, wobei die Ionen des dritten Legierungselements aus Co²⁺-, Cu²⁺-, Cr³⁺-, Bi³⁺-, Sb³⁺- und Ag⁺-Ionen und Kombinationen davon, bevorzugt aus Co²⁺-, Sb³⁺- und Ag⁺-Ionen und Kombinationen davon, ausgewählt sind.

5. Dispersionselektrolyt gemäß einem der Ansprüche 1 bis 4, wobei die weitere organische Verbindung mindestes eine Verbindung, ausgewählt aus Phenolen, Xanthogenaten, Carbamaten, Türkischrotöl, Ketonen, insbesondere Benzalaceton, aromatischen Aldehyden, insbesondere Naphthaldehyd, Polyvinylalkohol und beliebigen Kombinationen davon, umfasst.

6. Dispersionselektrolyt gemäß einem der Ansprüche 1 bis 5, wobei die Graphitpartikel einen medianen (d50) Partikeldurchmesser von 20 nm bis 20 µm, bevorzugt 1 bis 10 µm und mehr bevorzugt 1,5 bis 8 µm, aufweisen.

7. Dispersionselektrolyt gemäß einem der Ansprüche 1 bis 6,
wobei der Dispersionselektrolyt mindestens ein anionisches Dispergiermittel umfasst, das aus Sulfat-Verbindungen, die eine Alkylgruppe, eine Aralkylgruppe oder eine aromatische Gruppe mit jeweils bis zu 30 Kohlenstoffatomen aufweisen, Sulfonat-Verbindungen, die eine Alkylgruppe, eine Aralkylgruppe oder eine aromatische Gruppe mit jeweils bis zu 30 Kohlenstoffatomen aufweisen, Carboxy- und/oder Carboxylatgruppen-haltigen Polymeren, ausgewählt ist.

8. Dispersionselektrolyt gemäß Anspruch 7, wobei das anionische Dispergiermittel mindestens eine Sulfonat-Verbindung mit einer aromatischen Gruppe mit 6 bis 24 Kohlenstoffatomen umfasst,
die Sulfonat-Verbindung mit einer aromatischen Gruppe bevorzugt aus Arylsulfonaten, insbesondere mindestens eines von Benzolsulfonsäure, Phenolsulfonsäure, Naphthalinsulfonsäure, und Salzen davon, Polymeren mit aromatischen Sulfonatgruppen, insbesondere Polykondensate von mindestens einem von Benzolsulfonsäure, Phenolsulfonsäure und Naphthalinsulfonsäure mit Formaldehyd, und Salzen davon sowie Kombinationen dieser Sulfonat-Verbindungen ausgewählt ist.

9. Dispersionselektrolyt gemäß Anspruch 8, wobei das anionische Dispergiermittel mindestens ein erstes anionisches Dispergiermittel, das aus Sulfat-Verbindungen mit einer Alkylgruppe mit 6 bis 24 Kohlenstoffatomen, Sulfat-Verbindungen mit einer Aralkylgruppe mit 6 bis 24 Kohlenstoffatomen und Kombinationen davon ausgewählt ist, und mindestens ein zweites anionisches Dispergiermittel, das aus Sulfonat-Verbindungen mit einer aromatischen Gruppe mit 6 bis 24 Kohlenstoffatomen ausgewählt ist, umfasst.

10. Dispersionselektrolyt gemäß einem der Ansprüche 1 bis 9, wobei der Dispersionselektrolyt einen Komplexbildner enthält, der Ammoniak und/oder eine oder mehrere organische Verbindungen mit mindestens drei funktionellen Gruppen, von denen drei oder mehr funktionelle Gruppen aus Aminogruppen, Carboxygruppen, Carboxylatgruppen, Phosphonsäuregruppen und Kombinationen davon ausgewählt sind, umfasst.

11. Dispersionselektrolyt gemäß einem der Ansprüche 1 bis 10, wobei der Dispersionselektrolyt ein oder mehrere Leitsalze enthält, die bevorzugt aus Natriumchlorid, Kaliumchlorid, Ammoniumchlorid, Natriumacetat, Kaliumacetat, Ammoniumacetat, Ammoniumfluorid, Ammoniumbifluorid, Natriumfluorid, Kaliumfluorid und Kombinationen davon, ausgewählt sind und die mehr bevorzugt mindestens eines der Fluorid-haltigen Leitsalze enthalten.

12. Verfahren zur Herstellung eines beschichteten Substrats, umfassend die Schritte:
(a) das Bereitstellen eines metallischen oder metallisierten Substrats,
(b) das galvanische Beschichten des metallischen oder metallisierten Substrats unter Verwendung des Dispersionselektrolyten gemäß einem der Ansprüche 1 bis 10, wodurch eine Graphitpartikel-haltige Zinn-Nickel-Legierungsschicht auf mindestens einem Teil der Oberfläche des Substrats ausgebildet wird.

13. Beschichtetes Substrat, umfassend:
ein metallisches oder metallisiertes Substrat; und
eine Graphitpartikel-haltige Zinn-Nickel-Legierungsschicht, die zumindest auf einem Teil der Oberfläche des Substrats ausgebildet ist,
wobei
die Graphitpartikel-haltige Zinn-Nickel-Legierungsschicht eine Zinn-Nickel-Legierung und Graphitpartikel enthält, und
die Zinn-Nickel-Legierung
- 5 bis 40 Gew.-% Nickel,
- 0,1 bis 30 Gew.-% eines dritten Legierungselements, ausgewählt aus Cobalt (Co), Mangan (Mn), Kupfer (Cu), Chrom (Cr), Molybdän (Mo), Kohlenstoff (C), Bismut (Bi), Antimon (Sb), Selen (Se), Tellur (Te), Silber (Ag), Germanium (Ge) und Kombinationen davon, und
- 35 bis 75 Gew.-% Zinn,
bezogen auf die Zinn-Nickel-Legierung, umfasst.

14. Beschichtetes Substrat gemäß Anspruch 13, wobei die Graphitpartikel-haltige Zinn-Nickel-Legierungsschicht 0,1 bis 8 Gew.-%, bevorzugt 0,5 bis 4 Gew.-% und mehr bevorzugt 0,8 bis 3 Gew.-%, Graphitpartikel, bezogen auf das Gesamtgewicht der Graphitpartikel-haltigen Zinn-Nickel-Legierungsschicht, enthält.

15. Beschichtetes Substrat gemäß Anspruch 13 oder 14, wobei die Zinn-Nickel-Legierung aus
- 10 bis 30 Gew.-%, bevorzugt 20 bis 28 Gew.-%, Nickel,
- 0,4 bis 20 Gew.-%, bevorzugt 0,7 bis 15 Gew.-% und mehr bevorzugt 1,0 bis 10 Gew.-%, des dritten Legierungselements, und
- zum Rest aus Zinn und unvermeidbaren Verunreinigungen besteht.

16. Beschichtetes Substrat gemäß einem der Ansprüche 13 bis 15, wobei das dritte Legierungselement aus Co, Cu, Cr, C, Bi, Sb, Ag und Kombinationen davon, bevorzugt aus Co, Sb, Ag und Kombinationen davon, ausgewählt ist.

17. Elektrochemische Zelle, Elektrode, Bipolarplatte, Steckkontakt, Schaltkontakt, Schleifkontakt oder Gleitelement, umfassend das beschichtete Substrat gemäß einem der Ansprüche 13 bis 16.

18. Verwendung des Dispersionselektrolyten gemäß einem der Ansprüche 1 bis 11 für die galvanische Beschichtung eines Bauteils für eine elektrochemische Zelle, insbesondere für eine Elektrode oder eine Bipolarplatte, oder für die galvanische Beschichtung einer nicht für elektrochemische Zellen vorgesehenen Elektrode, eines Steckkontakts, eines Schaltkontakts, eines Schleifkontakts oder eines Gleitelements.
